# EUROPÄISCHE PATENTSCHRIFT

(11) **EP 0 432 305 B1**
(45) Veröffentlichungstag und Bekanntmachung des Hinweises auf die Patenterteilung: **02.02.1994**
(21) Anmeldenummer: 89123205.0
(22) Anmeldetag: 15.12.1989
(51) Int. Cl.: G01M 3/20

(54) **Vorrichtung und Verfahren zur Leckprüfung**
Method and apparatus for leak detection
Procédé et dispositif de contrôle d'étanchéité

(43) Veröffentlichungstag der Anmeldung: 19.06.1991
(73) Patentinhaber: ALCATEL HOCHVAKUUMTECHNIK GmbH, D-97877 Wertheim (DE)
(72) Erfinder: Handke, Klaus, D-6980 Wertheim (DE); Braunschweig, Falk, Dr., D-6980 Wertheim (DE); Bürger, Heinz-Dieter, D-6980 Wertheim (DE)
(74) Vertreter: Weinmiller, Jürgen

(56) Entgegenhaltungen:
- FR-A- 2 137 071
- FR-A- 2 366 553

## Beschreibung

Die Erfindung bezieht sich auf eine Vorrichtung zur Leckprüfung eines Prüflings, der sich in einem Prüfbehälter der vorrichtung befindet, mit einem ein Edelgas wie Helium nachweisenden Massenspektrometer und einer eine Vorvakuumpumpe und eine Spiromolekularpumpe aufweisenden Pumpanordnung, wobei das Massenspektrometer an einen Auschluß an der Saugseite der Spiromolekularpumpe angeschlossen ist.

Der Anwendungsbereich der Erfindung erstreckt sich insbesondere, aber nicht ausschließlich auf die Leckprüfung von kleinen Gehäusen z.B. für Halbleiterbauteile oder von Uhren.

Aus der US PS 4 608 866 ist eine Vorrichtung für derartige Anwendungsfälle bekannt, wobei ein Prüfbehälter während des Einbringens von Prüflingen einer Spülgasatmosphäre mit ungefähr Atmosphärendruck ausgesetzt ist. Nach dem Schließen des Prüfbehälters wird ein Ventil in Richtung auf eine Kühlfalle geöffnet, so daß das Spülgas entfernt wird, ehe ein Ventil in Richtung auf ein Massenspektrometer und eine diesem zugeordnete Molekularpumpenanordnung geöffnet wird.

Diese Vorrichtung ist aufwendig und teuer, benötigt sie doch eine sehr effektive Kühlfalle, mit der zuverlässig das ganze Spülgas aus dem Prüfbehälter absorbiert wird, so daß kein unzulässig hoher Totaldruck das Massenspektrometer erreichen kann. Für die Kühlfallentemperatur werden 16 bis 22K angegeben.

Würde man statt der Kühlfalle eine Vorpumpe an den Prüfbehälter anschließen, um nach dem Schließen des Behälters diesen auf einen dem Massenspektrometer angepaßten Druck zu bringen, ehe die Verbindung zu diesem hergestellt wird, dann bestünde die Gefahr, daß bereits bei diesem Vorevakuieren auch das Innere eines Prüflings bei Vorliegen eines entsprechend großen Lecks so weit mitevakuiert würde, daß später bei der eigentlichen Messung keine Heliumatome mehr nachgewiesen würden.

Aufgabe der Erfindung ist es daher, eine einfache Vorrichtung und ein entsprechendes Verfahren der eingangs genannten Art anzugeben, wobei auf eine leistungsfähige Kühlfalle, die flüssiges Helium benötigen würde, oder eine Refrigerator-Kryopumpe verzichtet werden kann.

Diese Aufgabe wird erfindungsgemäß durch eine Vorrichtung der eingangs genannten Art gelöst, die die kennzeichnenden Merkmale des Anspruchs 1 aufweist. Bezüglich von Merkmalen bevorzugter Ausführungsformen dieser Vorrichtung sowie eines Verfahrens zur Leckprüfung, das diese Vorrichtung verwendet, wird auf die abhängigen Ansprüche verwiesen.

Die Erfindung wird nun anhand einiger bevorzugter Ausführungsbeispiele mithilfe der Zeichnungen näher erläutert.

Fig. 1 zeigt schematisch ein erstes Ausführungsbeispiel einer erfindungsgemäßen Vorrichtung.

Fig. 2 zeigt eine Variante hierzu, die sich durch erhöhte Empfindlichkeit auszeichnet.

Fig. 3 zeigt eine weitere Variante für besonders kontaminationsempfindliche Prüflinge.

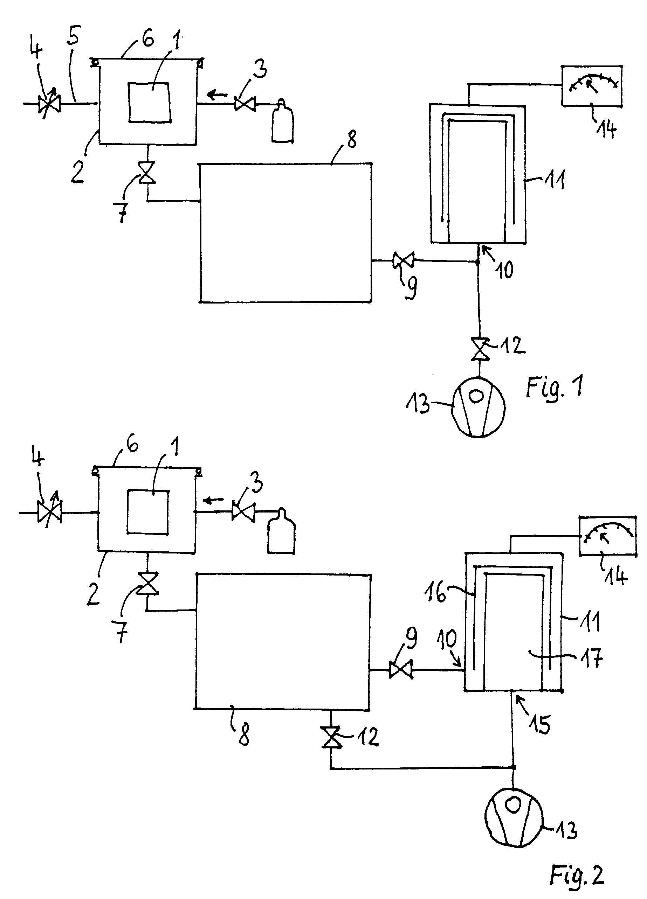

In Fig. 1 ist schematisch eine Vorrichtung zur Leckprüfung gezeigt. Mindestens ein zu testender Prüfling 1 befindet sich in einem Prüfbehälter 2, in den eine mit einem Ventil verschließbare Spülgasleitung 3 mündet und der einen mit einem Stellventil 4 versehenen Spülgasauslaß 5 besitzt. Der Behälter wird mit einem Deckel 6 nach dem Einbringen des oder der Prüflinge dicht verschlossen.

Der Prüfbehälter 2 ist weiter über ein Sperrventil 7 mit einer Akkumulationskammer 8 verbunden, deren Volumen deutlich größer als das Volumen des Behälters abzüglich des Volumens der Prüflinge 1 gewählt ist. In einem typischen Anwendungsfall beträgt das Volumen des Prüfbehälters (Restvolumen) etwa 5 cm³, während das Volumen der Akkumulationskammer mindestens 500 cm³ beträgt.

Über ein weiteres Sperrventil 9 ist die Akkumulationkammer an den Auslaß 10 einer Spiromolekularpumpe 11 und zugleich über ein weiteres Sperrventil 12 an die Saugseite einer Vorvakuumpumpe 13 angeschlossen. Die Massenspektrometerzelle 14 befindet sich auf der Saugseite der Spiromolekularpumpe 11, sodaß die vom Prüfling stammenden Heliumatome gegen die normale Pumprichtung der Spiromolekularpumpe 11 zum Massenspektrometer gelangen müssen (Gegenstromprinzip).

Eine Leckprüfung besteht aus zwei Schritten, nämlich einer die Messung vorbereitenden Spülung des Prüfbehälters und der eigentlichen Messung.

Zuerst wird nach dem Einlegen des oder der Prüflinge 1 in den Prüfbehälter 2 bei Atmosphärendruck der Deckel 6 fest verschlossen, und es wird eine Spülgasströmung erzeugt. Der Druck dieses heliumfreien Spülgases wird mithilfe des Ventils 4 so eingestellt, daß er zu Beginn geringfügig über dem normalen Innendruck der Prüflinge liegt und dann stetig ansteigt, so daß keine Heliumatome durch eventuelle Lecks aus den Prüflingen in den Prüfbehälter austreten können, und zwar auch nicht aufgrund strömungsdynamischer Effekte.

Zugleich sind die Ventile 9 und 12 geöffnet, sodaß die Akkumulationskammer 8 auf den Saugdruck der Vorvakuumpumpe evakuiert wird.

Zur eigentlichen Messung wird das Ventil 12 geschlossen, und unmittelbar darauf wird das Ventil 7 geöffnet. Das im Prüfbehälter 2 um die Prüflinge herum vorhandene Gas expandiert nun in die Akkumulationskammer hinein und durch diese hindurch, wobei dann Heliumatome, die durch eventuelle Lecks aus den Prüflingen austreten, durch die Spiromolekularpumpe hindurch zum Massenspektrometer gelangen. Die Signalhöhe der Masssenspektrometeranzeige ist also ein Maß für eventuell in den Prüflingen vorhandene Lecks. Auf diese Weise werden auch sehr große Lecks, wie zum Beispiel Löcher von einigen Millimetern Durchmesser oder schlecht sitzende Deckel in Quarzgehäusen oder Uhren oder anderen Behältern gefunden, die übersehen würden, wenn der Prüfbehälter vor der eigentlichen Messung vorevakuiert worden wäre.

Die Aufgabe der Akkumulationskammer besteht in der Verringerung des Druckeinbruchs an der Auslaßseite der Spiromolekularpumpe beim Öffnen des Ventils 7. Um hier die Druckerhöhung in zulässigen Grenzen zu halten, muß das Volumen der Akkumulationskammer entsprechend groß gewählt werden. Will man etwa einen Druck am Auslaß 10 der Spiromolekularpumpe von 50 mbar nicht überschreiten, und beträgt das Restvolumen des Prüfbehälters 2 etwa 5 cm³ bei Atmosphärendruck, dann muß die Akkumulationskammer ein Volumen von mindestens 100 cm³ besitzen. Möchte man zugunsten einer kurzen Antwortzeit des Massenspektrometers den Druck am Auslaß der Spiromolekularpumpe weiter erniedrigen, dann muß ein entsprechend noch größeres Volumen der Akkumulationskammer gewählt werden.

In Fig. 2 ist eine Variante zu Fig. 1 dargestellt, bei der für funktionsgleiche Teile gleiche Bezugszeichen verwendet wurden. Der einzige Unterschied liegt darin, daß die Spiromolekularpumpe zwei Zonen unterschiedlichen Saugvermögens und den Anschluß 10 am Übergang zwischen diesen beiden Zonen besitzt. Die Spiromolekularpumpe ist eine Holweckpumpe mit einem glockenförmigen Rotor 16, wobei der Bereich zwischen der Innenseite des glockenförmigen Rotors und einem Innenstator 17 nur geringes Saugvermögen besitzt und somit lediglich als dynamische Dichtung wirkt. Der Auslaß 15 dieser Pumpe ist unmittelbar an die Vorvakuumpumpe 13 angeschlossen, während der Anschluß 10 über das Ventil 9 zur Akkumulationskammer 8 führt. Zusätzlich ist noch eine Verbindung 18 zwischen der Vorpumpe 13 und der Akkumulationskammer 8 vorgesehen, die das Sperrventil 12 enthält. Über diese Leitung erfolgt eine schnelle Evakuierung der Akkumulationskammer vor der eigentlichen Messung.

Durch die Verbindung der Akkumulationskammer mit dem Zwischenanschluß 10 wird die Nachweisempfindlichkeit erhöht, während dafür der maximal zulässige Druck am Anschluß 10 niedriger sein muß als am Auslaß 15. Das bedingt wieder ein größeres Volumen der Akkumulationskammer.

Die Meßzeit, d.h. die Zeit, in der die Ventile 7 und 9 geöffnet sind, hängt von der gewünschten Empfindlichkeit des Nachweises ab. Man mißt dann in dem Massenspektrometer eine Anstiegskurve des Heliumpartialdrucks, deren Steilheit ein Maß für die Größe der Lecks ist. Üblicherweise wird diese Steilheit in einem Rechner in Vergleich zu einer Standardkurve für leckfreie Prüflinge gesetzt und ausgewertet.

Befindet sich in sich in den Prüflingen normale Luft, d.h. ein Heliumanteil von 5 ppm, dann lassen sich mit der Vorrichtung gemäß Fig. 2 Empfindlichkeiten bis knapp unter 10⁻⁵ mbarl/sec erreichen. Befindet sich dagegen reines Helium in den Prüflingen, dann läßt sich die Nachweisempfindlichkeit auf einen Wert unter 10⁻¹² mbarl/sec erhöhen.

Nach Beendigung der Prüfung wird durch Öffnen des Ventils 12 die Akkumulationskammer wieder auf den Vorvakuumdruck (z.B. 10⁻² mbar) und einen niedrigen Heliumpartialdruck evakuiert.

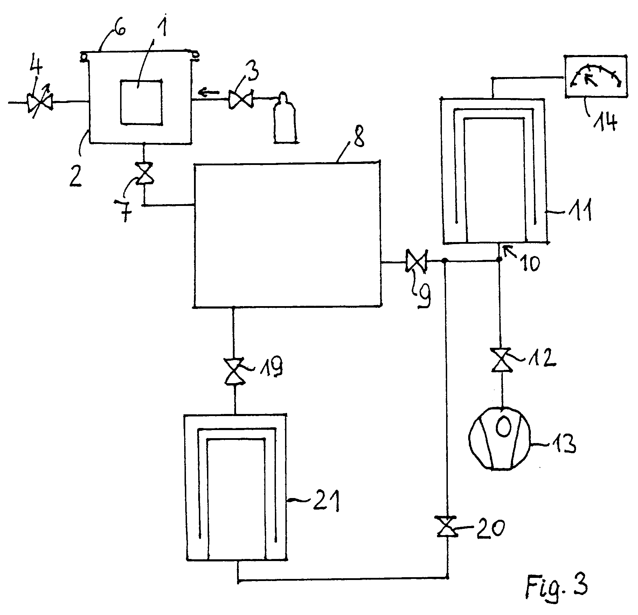

Fig. 3 zeigt eine weitere Variante, bei der auch für gleiche Bauteile gleiche Bezugszeichen verwendet wurden. Diese Ausführungsform unterscheidet sich von den vorherigen nur in der Art, wie vor der eigentlichen Messung die Akkumulationskammer 8 evakuiert wird. Hier ist zu diesem Zweck zwischen zwei Ventilen 19 und 20 eine weitere Spiromolekularpumpe 21 zwischen die Akkumulationskammer 8 und die Vorvakuumpumpe 13 zwischengeschaltet, die während des ersten Verfahrensschritts wirksam ist und die Aufgabe hat, etwaige Kohlenwasserstoffe, die in der Vorvakuumpumpe anfallen, am Übertritt in die Akkumulationskammer zu hindern, um so jede Verschmutzung der Prüflinge mit diesen Stoffen auszuschalten.

Es ist vorteilhaft, als Vorvakuumpumpe eine dreistufige Drehschieberpumpe gemäß der DE-36 16 319 C2 zu verwenden, da hierdurch sicher verhindert wird, daß Heliumatome, die nicht aus dem Prüfling, sondern der Vorvakuumpumpe stammen, die Messung verfälschen.

## Patentansprüche

1. Vorrichtung zur Leckprüfung eines prüflings (1), der sich in einem Prüfbehälter (2) der vorrichtung befindet, mit einem ein Edelgas wie Helium nachweisenden Massenspektrometer (14) und einer eine Vorvakuumpumpe (13) und eine Spiromolekularpumpe (11) aufweisenden Pumpanordnung, wobei das Massenspektrometer (14) an einen Auschluß an der Saugseite der Spiromolekularpumpe (11) angeschlossen ist, dadurch gekennzeichnet, daß zwischen den Prüfbehälter (2) und einen anderen Anschluß (10) der Spiromolekularpumpe (11) eine Akkumulationskammer (8) eingefügt ist, deren Volumen mindestens zwanzigmal größer als das des Prüfbehälters (2) ist, daß der Prüfbehälter mit Mitteln (3, 4) zum Spülen mit einem Spülgas unter einem einstellbaren Überdruck versehen ist und daß Sperrventile (7, 9) zwischen Prüfbehälter (2) und Akkumulationskammer (8) sowie zwischen der Akkumulationskammer (8) und dem anderen Anschluß (10) der Spiromolekularpumpe (11) angeordnet sind.

2. Vorrichtung nach Anspruch 1, dadurch gekennzeichnet, daß ein weiteres Sperrventil (12) zwischen der Saugseite der Vorvakuumpumpe und dem anderen Anschluß (10) der Spiromolekularpumpe (11) vorgesehen ist.

3. Vorrichtung nach Anspruch 1, dadurch gekennzeichnet, daß die Spiromolekularpumpe (11) in Reihe zwei Zonen unterschiedlichen Saugvermögens und den anderen Anschluß (10) zwischen diesen Zonen aufweist, wobei die Zone geringen Saugvermögens auf der Auslaßseite liegt und die Akkumulationskammer über ein Sperrventil (9) mit diesem Anschluß verbunden ist.

4. Vorrichtung nach Anspruch 3, dadurch gekennzeichnet, daß die Saugseite der Vorvakuumpumpe (13) einerseits unmittelbar mit dem Auslaß (15) der Spiromolekularpumpe (11) und andererseits über ein weiteres Ventil (12) mit der Akkumulationskammer (8) verbunden ist.

5. Vorrichtung nach einem der Ansprüche 1 bis 4, dadurch gekennzeichnet, daß eine weitere Hochvakuumpumpe (21) oder eine Sorptions- oder Kühlfalle zwischen die Akkumulationskammer (8) und den anderen Anschluß (10) der Spiromolekularpumpe über Ventile (19, 20) eingefügt ist.

6. Vorrichtung nach einem der Ansprüche 1 bis 5, dadurch gekennzeichnet, daß die Vorvakuumpumpe (13) als dreistufige Drehschieberpumpe ausgebildet ist.

7. Verfahren zur Leckprüfung eines Prüflings unter Verwendung einer Vorrichtung gemäß einem der Ansprüche 2, 4, 5, 6, dadurch gekennzeichnet, daß zuerst bei geschlossenem Ventil (7) zwischen Akkumulationskammer (8) und Prüfbehälter (2) dieser mit einem einstellbaren Druck gespült wird, während gleichzeitig die Akkumulationskammer (8) von der Vorvakuumpumpe (13) evakuiert wird, daß dann das genannte Ventil (7) geöffnet wird, während gleichzeitig das Ventil (12) zwischen der Vorvakuumpumpe (13) und dem anderen Anschluß (10) der Spiromolekularpumpe (11) geschlossen wird und der Edelgasnachweis durchgeführt wird.

8. Verfahren nach Anspruch 7, dadurch gekennzeichnet, daß der Edelgasnachweis dadurch erfolgt,daß der zeitliche Verlauf des Edelgas-Partialdrucks erfaßt und mit dem zeitlichen Verlauf des Edelgas-Partialdrucks einer Standardmessung ohne Leck verglichen wird.

9. Verfahren nach einem der Ansprüche 7 und 8, dadurch gekennzeichnet, daß der Spülgasdruck zu Beginn des Spülens etwas höher als der normale Innendruck des Prüflings (1) gewählt wird und dann während des Spülens stetig ansteigend gewählt wird.

## Claims

1. A device for detecting leaks in a test object (1), which is contained in a test container (2) of the device, comprising a mass spectrometer (14) for detecting a noble gas such as helium and a pump arrangement including a primary vacuum pump (13) and a spiromolecular pump (11), the mass spectrometer (14) being connected to a port at the suction side of the spiromolecular pump (11), characterized in that between the test container (2) and another port (10) of the spiromolecular pump (11) an accumulation chamber (8) is inserted, whose volume is at least twenty times larger than that of the test container (2), that the test container is provided with means (3, 4) for purging with a purge gas under an adjustable overpressure, and that closure valves (7, 9) are disposed between the test container (2) and the accumulation chamber (8) as well as between the accumulation chamber (8) and said other port (10) of the spiromolecular pump (11).

2. A device according to claim 1, characterized in that a further closure valve (12) is provided between the suction side of the primary vacuum pump and said other port (10) of the spiromolecular pump (11).

3. A device according to claim 1, characterized in that the spiromolecular pump (11) comprises in series two zones of different suction capacity and said other port (10) between these zones, the zone of lower suction capacity being disposed at the outlet side and the accumulation chamber being connected to this port via a closure valve (9).

4. A device according to claim 3, characterized in that the suction side of the primary vacuum pump (13) is connected on the one hand directly to the outlet (15) of the spiromolecular pump (11) and on the other hand via a further valve (12) to the accumulation chamber (8).

5. A device according to one of claims 1 to 4, characterized in that a further high vacuum pump (21) or a sorption or low temperature trap is inserted between the accumulation chamber (8) and said other port (10) of the spiromolecular pump via valves (19, 20).

6. A device according to one of claims 1 to 5, characterized in that the primary vacuum pump (13) is a three stage rotary vane pump.

7. A method for detecting leaks in a test object using a device according to one of claims 2, 4, 5, 6, characterized in that firstly, the valve (7) between the accumulation chamber (8) and the test container (2) being closed, the latter is purged at adjustable pressure, while at the same time the accumulation chamber (8) is evacuated by the primary vacuum pump (13), whereupon said valve (7) is opened, while simultaneously the valve (12) between the primary vacuum pump (13 and said other port (10) of the spiromolecular pump (11) is closed and the inert gas detection is carried out.

8. A method according to claim 7, characterized in that the inert gas detection is carried out by recording the time function of the inert gas partial pressure and by comparing it with the time function of the inert gas partial pressure of a standard object without a leak.

9. A method according to one of claims 7 and 8, characterized in that the purge gas pressure at the beginning of the purge phase is chosen slightly higher than the normal inside pressure of the test object (1) and is then continuously increased during purging.

## Revendications

1. Dispositif pour contrôler l'étanchéité d'un objet de test (1) contenu dans un récipient de test (2) du dispositif, comprenant un spectromètre de masse (14) détectant un gaz noble comme l'hélium, et un arrangement de pompage comprenant une pompe à vide primaire (13) et une pompe spiromoléculaire (14), le spectromètre de masse (14) étant connecté à un raccord du côté aspiration de la pompe spiromoléculaire (11), caractérisé par le fait qu'une chambre d'accumulation (8) est insérée entre le récipient de test (2) et un autre raccord (10) de la pompe spiromoléculaire, le volume de cette chambre étant au moins vingt fois plus grand que celui du récipient de test (2), que le récipient de test est pourvu de moyens (3, 4) pour rincer avec un gaz de rinçage sous une sur pression réglable et que des vannes de blocage (7, 9) sont disposées entre le récipient de test (2) et la chambre d'accumulation (8) ainsi qu'entre la chambre d'accumulation (8) et ledit autre raccord (10) de la pompe spiromoléculaire (11).

2. Dispositif selon la revendication 1, caractérisé par le fait qu'une autre vanne de blocage (12) est prévue entre le côté aspiration de la pompe à vide primaire et ledit autre raccord (10) de la pompe spiromoléculaire.

3. Dispositif selon la revendication 1, caractérisé par le fait que la pompe spiromoléculaire (11) présente en série deux zones de capacités d'aspiration différentes, ledit autre raccord (10) étant disposé entre ces zones, la zone de capacité d'aspiration moindre étant disposée du côté sortie et la chambre d'accumulation étant connectée à ce raccord à l'aide d'une vanne de blocage (9).

4. Dispositif selon la revendication 3, caractérisé par le fait que le côté aspiration de la pompe à vide primaire (13) est connecté d'un côté directement à sortie (15) de la pompe spiromoléculaire (11) et d'autre côté par l'intermédiaire d'une autre vanne (12) à la chambre d'accumulation (8).

5. Dispositif selon l'une des revendications 1 à 4, caractérisé par le fait qu'une autre pompe à vide secondaire (21) ou un piège de sorption ou de refroidissement est insérée entre la chambre d'accumulation (8) et ledit autre raccord (10) de la pompe spiromoléculaire par l'intermédiaire de vannes (19, 20).

6. Dispositif selon l'une des revendications 1 à 5, caractérisé par le fait que la pompe à vide primaire (13) est une pompe rotative à trois étages.

7. Procédé de contrôle de l'étanchéité d'un objet à tester en utilisant le dispositif selon l'une des revendications 2, 4, 5, 6, caractérisé par le fait que d'abord le récipient de test (2) est rincé avec une pression réglable, la vanne (7) entre la chambre d'accumulation (8) et ce récipient (2) étant alors fermée, tandis que, simultanément, la chambre d'accumulation (8) est évacuée par la pompe à vide primaire (13), qu'ensuite ladite vanne (7) est ouverte, tandis que la vanne (12) est simultanément fermée entre la pompe à vide primaire (13) et ledit autre raccord (10) de la pompe spiromoléculaire, et la détection de gaz noble est alors effectuée.

8. Procédé selon la revendication 7, caractérisé par le fait que la détection de gaz noble est effectuée en détectant la fonction de croissance de la pression partielle du gaz noble et que cette fonction est comparée à la fonction de croissance de la pression partielle de gaz noble dans un étalon normalisé sans fuite.

9. Procédé selon l'une des revendications 7 et 8, caractérisé par le fait que la pression de gaz de rinçage au début du rinçage est légèrement plus élevée que la pression normale intérieure de l'objet à tester (1) et qu'ensuite elle croît continuellement au courant du rinçage.
